# EUROPEAN PATENT APPLICATION

(11) **EP 2 949 984 A1**
(43) Date of publication of application: **02.12.2015**
(21) Application number: 12887965.7
(22) Date of filing: 07.11.2012
(51) Int. Cl.: F16L 33/22, F16L 37/091, F16L 37/092

(54) **RAPID-ACTION COUPLING FOR PIPES**

(71) Applicant: Hita Technology of Plastic System S.L., 18100 Armilla (Granada) (ES)
(72) Inventor: MARTINEZ CASTAÑO, Juan Carlos, 18100 Armilla Granada (ES)
(74) Representative: ZBM Patents - Zea, Barlocci & Markvardsen
(86) International application number: PCT/ES2012/000277
(87) International publication number: WO 2014/072539

(57) **Abstract**

Rapid-action coupling for plastic and metal pipes (9), by means of an inner insert (2), a body (1), an attachment ring (5), a locking grip (6) having plastic and metal teeth all around the circumference, a release bushing (7) and an outer bushing (8) connected to the body (1), with double sealing, with an inner seal (3) and an outer seal (4) in different configurations, such as connecting bushings, threaded bushings, reduced bushings, connecting elbows, threaded elbows, reducing elbows, connecting T-joints, threaded T-joints, reducing T-joints and collectors with a plurality of outlets, reducing production and storage costs by means of a universal coupling.

## Description

### Object of the invention

The present invention relates to a rapid-action coupling for plastic and metal pipes, through an inner insert, a body, an attachment ring, a locking grip comprising plastic and metal teeth all around the circumference, a release bushing and an outer bushing connected to the body, with double tightness, and with an inner joint and an outer joint, in different configurations, such as connecting bushings, threaded bushings, reduced bushings, connecting elbows, threaded elbows, reducing elbows, connecting T-joints, threaded T-joints, reducing T-joints and collectors with a plurality of outlets, reducing production and storage costs by means of a universal coupling.

### Background of the invention

There currently exist several types of systems for connecting pipes for the supply of hot water, cold water, high temperature water for heating, gas supply within buildings, compressed air installations, the typical ones being those referred to as *sliding bushing* by means of sliding, those referred to as *press fitting* by means of fitting under pressure and those referred to as *push fit* by means of fitting under traction.

From the disclosure of Spanish patent ES-216838, a sliding bushing coupling that allows connecting plastic pipes and that comprises a metal body and sliding bushings which slide on the pipe is known. This technique is based on the pressure exerted on the bushing, which slides on the pipe, resulting in that the metal body is attached to the pipe. In order to make the coupling the pipe is required to be expanded, inserted on the metal body and the bushing to be moved by means of a machine applying axial compression until attachment is accomplished.

From DE 196 45 853 C1 a rapid-action coupling for pipes is known. A connecting portion is received in one end of the pipe. The connecting portion comprises a tapered connecting bushing and a push cone. The push cone is provided with toothed elements in the portion that is in contact with the pipe. As the pipe is inserted into the coupling, a locking clip holding the spring in its prestressed position is removed. This spring presses against the push cone and the toothed elements are nailed on the outside of the pipe.

Similarly, a rapid-action coupling for pipes is disclosed in patent US-2005012328, where sealing is ensured by the coupling through a seal having special characteristics with a ring shaped groove in the seal housing. The main disadvantage is that due to tolerances in the various plastic pipes, they are greater than those supported by the seal, resulting in that they do not work correctly with any type of pipe, being only compatible with certain plastic pipe and under the precise tolerances so that coupling is allowed.

Rapid-action coupling for pipes are used as portion of an installation system for conveying fluids and gases within a large range of pressures and temperatures. Typically, rapid-action coupling for plastic and metal pipes preferably comprises metal parts.

Rapid-action coupling for pipes require very tight pipe tolerances for proper operation in order to ensure sealing, said tolerances being much tighter than the pipe manufacturing standards themselves.

### Summary of the invention

The object of the invention is, based on this prior art, connecting different types of plastic and metal pipes through a single coupling, ensuring sealing under low and high pressure as well as low and high temperature and with fewer parts involved as possible, at low cost both in manufacturing and assembly by the installer.

Rapid-action coupling avoids the need to use special assembly tools, reducing costs involved in investment, maintenance and power of the tools.

The assembly of the pipe with rapid-action pull coupling is carried out much more quickly and easily with currently existing couplings. Likewise, safe and reliable connection should be also ensured. In the case of the invention, assembly is carried out manually by an operator, without using any special compression mechanical tool, only by positioning one end of the pipe in the rapid-action coupling and axially applying a small pulling force.

Also, the invention ensures sealing in connections with plastic and metal pipes through the use of two seals: an asymmetrical tapered cross-section inner seal having additional advantages over current systems, and an O-ring type outer seal, which ensures sealing safety regardless of thickness and pipe diameter tolerances. The different parts of the rapid-action coupling are essentially made of plastic material.

Rapid-action coupling by means of pulling system of the invention comprises a main body, an inner insert, an asymmetrical tapered cross-section seal, an O-ring seal, an outer seal attachment ring, an locking grip, a release member and an outer bushing.

The main body of the coupling has different configurations: straight, T-shaped, 90° or 45° elbow-shaped, manifold-shaped or distributor-shaped, in couplings between pipes or having one or various threaded ends, as well as any configuration as used according to the construction systems based on different applications.

The inner insert of the coupling is made independent from the main body in order to make different pipes compatible, using inserts having different outside diameters based on the inner diameters of the pipes to be connected. These inner inserts, during their assembly process and after manufacture, are attached to the main body by means of an ultrasonic welding technique, ensuring a strong connection around the entire outer perimeter of the insert to the main body. The inner insert includes several saw-shaped inner serrations with sufficient slope to facilitate insertion of the pipe in order to strengthen clamping of the pipe to the coupling device. The inner insert has an annular recess to accommodate the asymmetrical tapered cross-section inner seal thus ensuring sealing.

The inner seal has an asymmetrical tapered configuration with a given positioning, as it is asymmetrical on the inner insert, so as insertion of the pipe is facilitated due to its tapered configuration. The seal has three semi-circular shaped protrusions on the inner surface thereof in order to ensure sealing of the insert.

In the outer thicker area and at a side portion thereof it is provided with a groove across the entire diameter, acting as a spring for loading and unloading pressure generated by the pipe in order to facilitate pipe insertion and depending on the inner pipe diameter a sealing tolerance range is ensured which is far greater than those currently existing, allowing different types of pipes to be used based on their manufacturing standard. The tapered shape prevents it from being rolled by the pipe as its thickness starts from smaller to greater as the pipe is inserted.

The outer seal has an O-ring type symmetrical configuration which is positioned in the main body. This seal acts as a safety seal, providing the coupling with guarantee of sealing in case of a poor operator's performance which might cause total or partial breakage of the tapered inner seal, or due to a defect on the pipe inner surface.

The outer seal attachment ring is configured to attach the O-ring type outer seal providing a receptacle suitable for sealing the outside of the pipe and the entire diameter thereof, absorbing dimensional tolerances specified by different pipe manufacturing standards.

The attachment ring is configured by several saw-shaped serrations oriented at an angle to facilitate pipe insertion, being circular in shape and not attached through the entire diameter in order to absorb the various pipe outside diameter tolerances.

The attachment ring is tapered on the outside to apply a radial pressure on the pipe as it moves within the outer bushing when the pipe is pulled by the internal pressure of the fluids or gases.

The attachment ring is made of two types of materials: a main plastic material and a metal insert in the first portion, forming a first metal rib and several plastic ribs. The metal insert ensures actuation of the attachment ring in those plastic pipes where the surface is of a greater hardness coefficient as well as actuation in metal pipes, where exclusively plastic brackets are not effective.

The rear, thicker attachment ring has a crenellation type material discharge configuration providing greater flexibility in coupling and locking actuation on the pipe when subjected to extreme internal pressures.

The release member comprises a plurality of longitudinal fins oriented inversely to pipe insertion whose end tips are formed for applying sufficient pressure on the attachment ring to release the pipe if necessary. The release member is configured to be hidden inside the outer bushing and on the pipe surface in order to prevent release actuation from the attachment ring in expected or undesirable situations.

The outer bushing acts as a coupling clamping element, preventing the main body and the attachment ring from disengaging from the pipe. The configuration of the bushing in its coupling on the outside of the main body bears on an annular protrusion with a fitting angle of 90°. In one portion of the interior, the bushing has an annular rib with the purpose of clamping the outer seal attachment ring preventing it from being moved. In another portion of the interior, the bushing has a 90° annular rib in order to define an end of travel for the attachment ring and to prevent unwanted actuation of the release element.

The outer bushing, at one end portion of the interior thereof, has a tapered shape for aiding, by contrast, the attachment ring and thus enhancing grip on the pipe outer surface of the attachment ring.

The outer bushing, in the end portion of the interior thereof, is provided with the receptacle for the release element, whose length is longer than the release element so that it is hidden inside the bushing.

It is stated that all the above described parts are supplied when placed on the market pre-assembled at the factory, forming a single assembly that can not be disassembled neither fully nor partially and allowing insertion of different pipes which are required to be connected.

Therefore, there are several basic advantages of the invention over the prior art systems. Installation times are reduced up to 90% since no mechanical tool is required as it is a rapid-action coupling with manual assembly of the pipes by simply applying a slight axial pressure on the pipe. The coupling is compatible with different standard plastic and metal standardized pipes in the market. A double seal is provided: a main seal and safety seal. This allows possibility of recovering the pipe by releasing it from the coupling easily and safely for being reused or for modifying the installation without disassembling the coupling thus avoiding manipulation of its components by the operator. Due to the configuration of the outer bushing and the inner inserts, oval shapes and differences in thickness and diameter which are usually present in different plastic pipes are corrected avoiding leaks which typically occur when subjected to low pressures.

Other features of the invention are set forth in the remaining dependent claims and reference is made to the description of the figures for supporting the claims.

### Description of the drawings

For completeness of the description of the details herein and in order to help for a better understanding and comprehension of the features of the invention according to a preferred practical embodiment thereof, a set of drawings is herein enclosed as an integral portion thereof, wherein the following is shown by way of an illustrative and non-limiting character:
Figure 1 is a sectional view of the rapid-action coupling without a pipe to be coupled with all its components.
Figure 2 is a three dimensional view of the inner insert.
Figure 3, is a sectional view of the asymmetrical tapered inner seal.
Figure 4, a sectional view of the O-ring type outer seal.
Figure 5 is a three dimensional view of the attachment ring of the O-ring type outer seal.
Figure 6 is a three dimensional view of the attachment ring.
Figure 7 is a three dimensional view of the release element.
Figure 8 is three-dimensional and sectional views of the outer bushing.
Figure 9, a sectional view of the rapid-action coupling with a pipe in a final, installed condition without being subjected to an internal pressure.
Figure 10 is a sectional view of the rapid-action coupling with a pipe in a final, mounted state subjected to an internal pressure.

### DESCRIPTION OF THE DRAWINGS

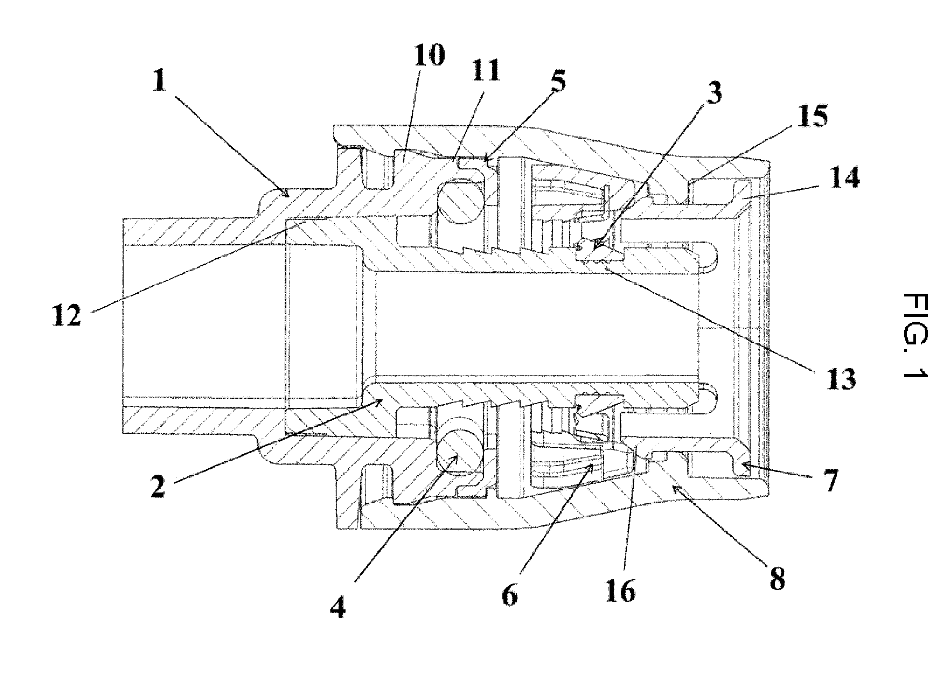

Figure 1 shows a sectional view of the invention of the rapid-action coupling with all its parts and which comprises a main body (1), being able to take different formats such as straight, curved or T-shaped, with a 90° protrusion through its entire diameter (10) in order to retain the outer bushing (8) axially, with upper and lower annular protrusions (11), the former being for attaching the attachment ring (5) and the latter being for defining the receptacle for the O-ring type outer seal (4).

An inner insert (2) configured to tightly receive a section of pipe (9) on the outside is provided. This inner insert (2) is configured during the assembly process of the invention on the body (1) in different outer diameter options, depending on the pipe (9) to be connected with the device. In portion (12) an annular protrusion is provided in the body (1) and in the inner insert (2) for attaching the different configurations of inner inserts (2) by means of ultrasound.

The inner insert (2) is configured at the end opposite the body (1) with an annular recess (13) for receiving the asymmetrical tapered cross-section inner seal (3) in order to ensure sealing at the inner part of the pipe (9) of the coupling.

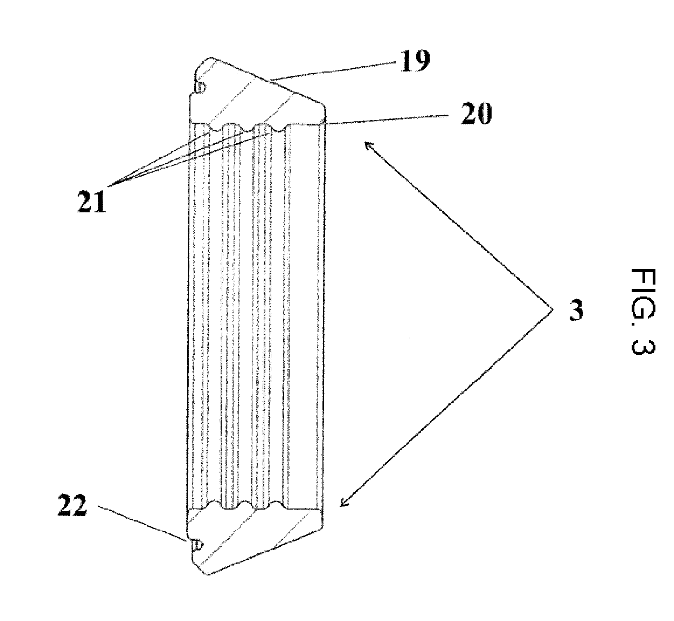

An asymmetrical tapered cross-section inner seal (3) with a special design shown in figure 3 is provided whose purpose is to ensure sealing in the inner part of the pipe (9).

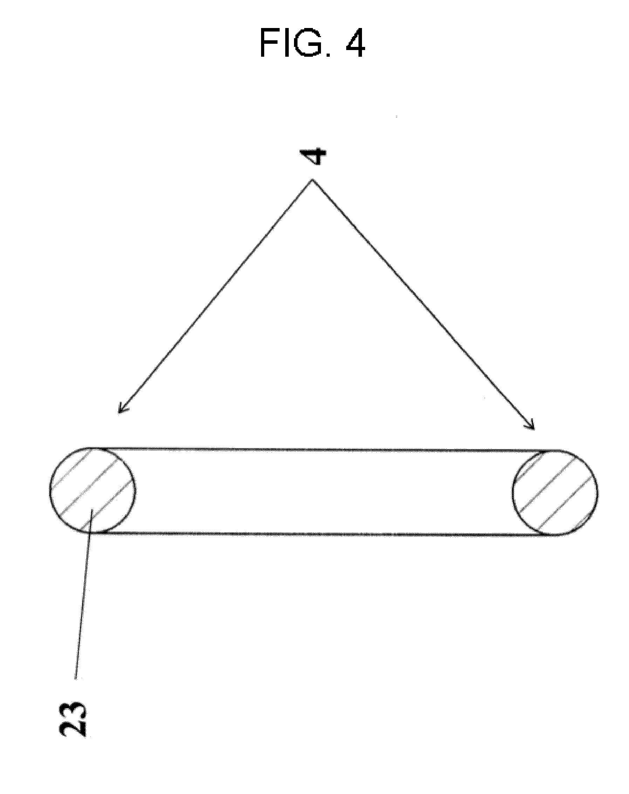

An O-ring type external seal (4) having properties as shown in figure 4 is provided whose purpose is to ensure sealing in the outer part of the pipe (9).

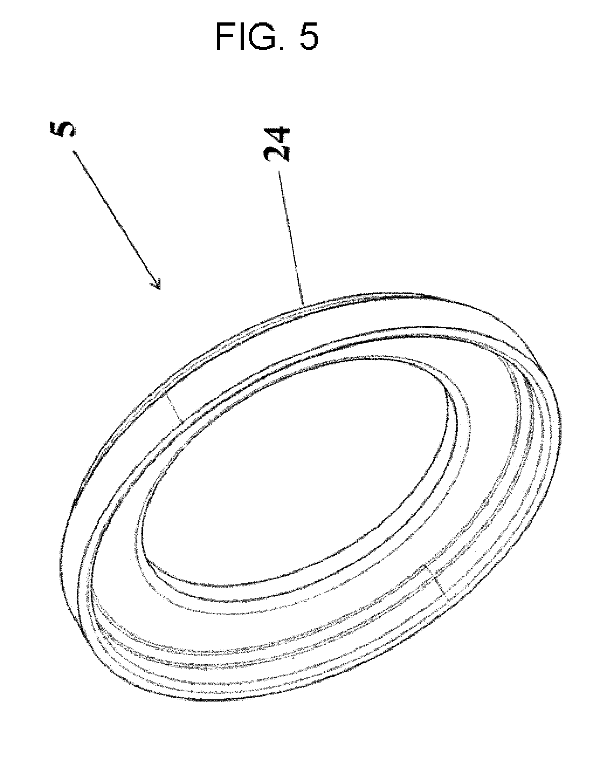

An attachment ring (5) having a design as shown in figure 5 is provided whose purpose is attaching the outer ring (4).

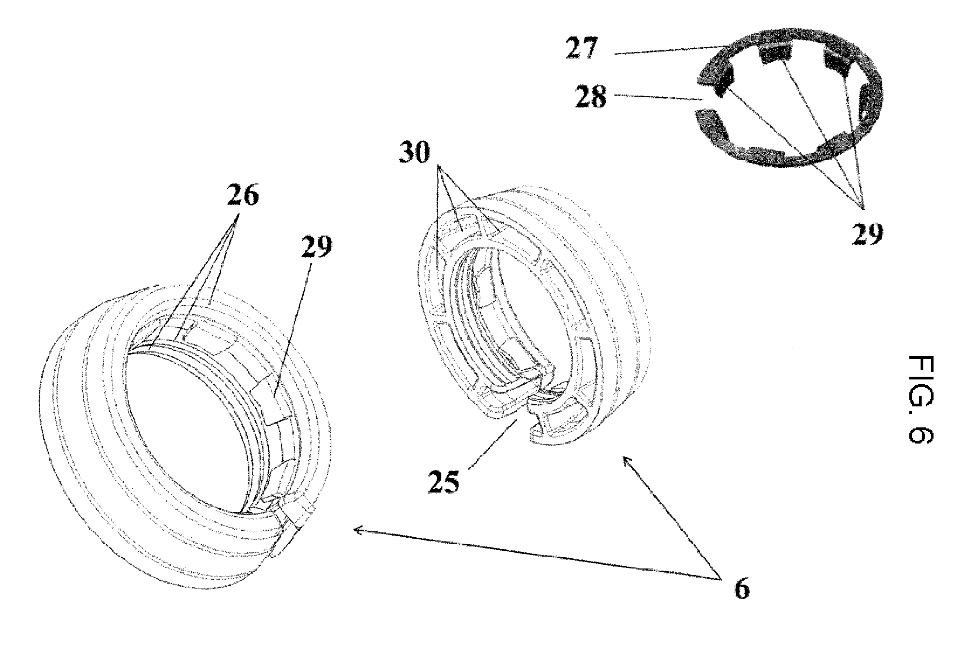

An attachment ring (6) with a special design as shown in figure 6 is provided whose purpose is attaching the pipe (9) at its outer part through a mixed plastic-metal toothed portion, having a cylindrical tapered configuration in the outside in order to conform to the outer bushing (8) and to apply higher anchoring pressure on the pipe (9).

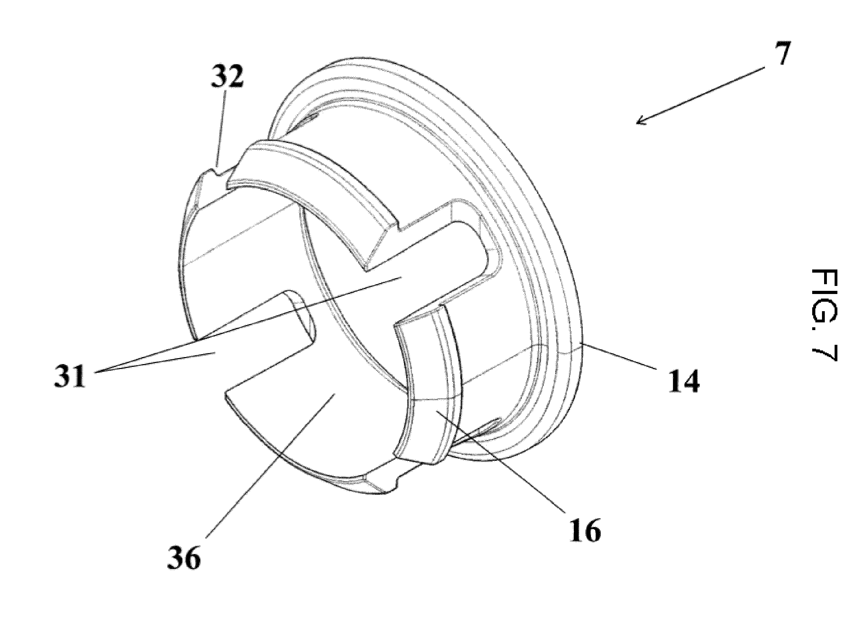

A release member (7) with a special design as shown in figure 7 is provided whose purpose is the possibility of recovering the rapid-action coupling from the pipe (9) at a given time as desired by the operator. This release member (7) is received such that it can not be operated occasionally by the operator as it is in the inside of the outer bushing (8) such that a special auxiliary element is required to actuate the release member (7). It has a configuration at the outer part (14) through the entire diameter with an annular shaped protrusion acting as end of travel (15) on the inner part of the outer bushing (8). The inner part (16) of the release element (7) is designed as having a frusto conical shape to facilitate engagement with the locking element (6) when actuated, such that the teeth of the locking element (6) are disengaged due to their increase in diameter, releasing the pipe (9), recovering it from the coupling.

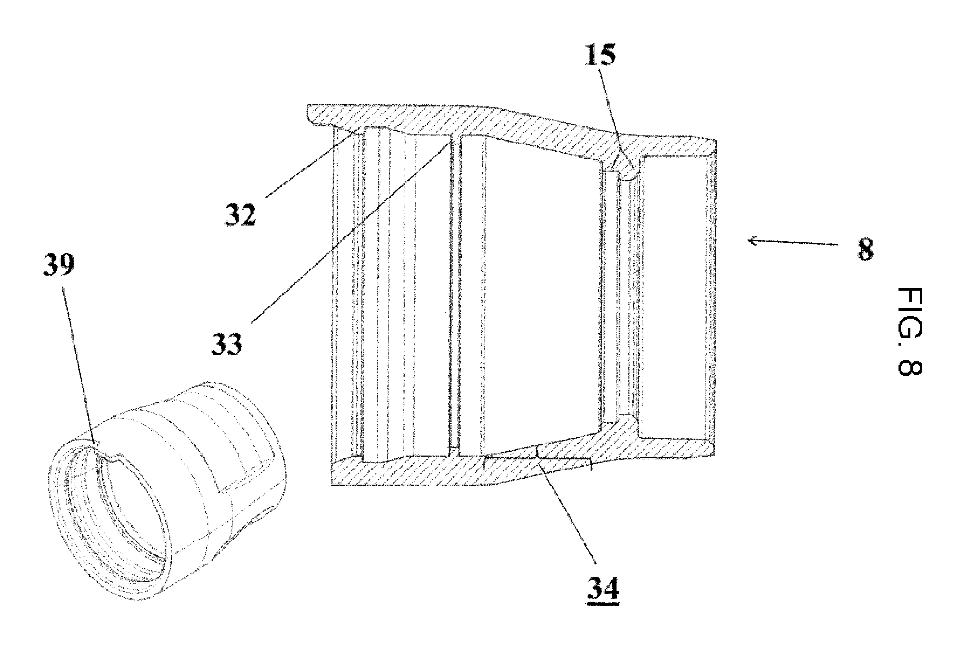

An outer bushing (8) with a special design as shown in figure 8 is provided whose purpose is clamping to the body (1), attaching the attachment ring (5), sliding of the frusto conical locking grip (6) to prevent the pipe (9) from coming out of the coupling and the receptacle of the release member (7) on the outside, inner part thereof.

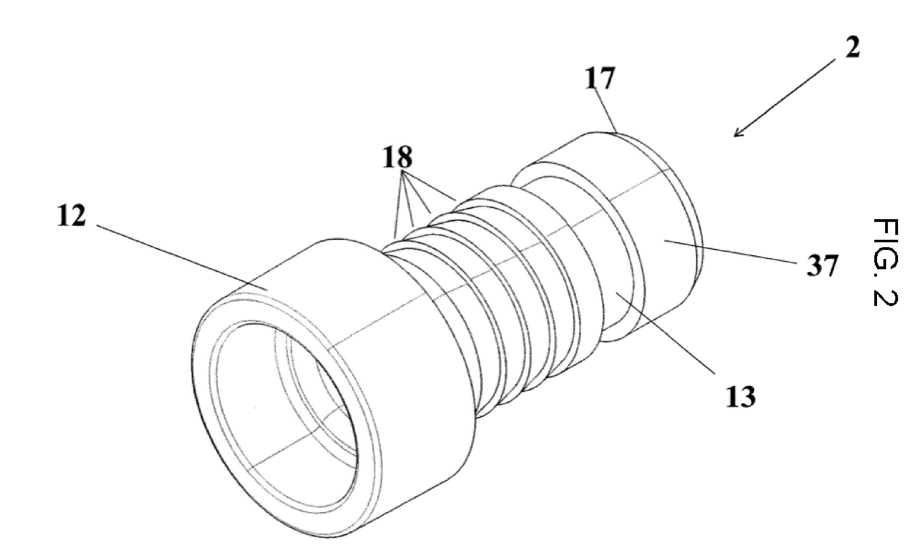

Figure 2 shows a three dimensional view of the inner insert (2) configured to tightly receive, on the outer part thereof, a section of pipe (9). This inner insert (2) is configured during the assembly process of the invention on the body (1) in different outer diameter options, depending on the pipe (9) to be connected with the device. In portion (12) an annular protrusion in the body (1) and in the inner insert (2) is provided for attaching the different configurations of inner inserts (2) by means of ultrasound.

The inner insert (2) is configured, at the end opposite the body (1,) with an annular recess (13) for the purpose of receiving the asymmetrical tapered cross-section inner seal (3) to ensure sealing in the inner part of the coupling pipe (9).

The inner insert (2) is configured, at one free portion (17) thereof, to be tapered in shape for receiving the pipe (9). In the intermediate portion (18), it has a cylindrical configuration and comprises a plurality of tapered saw teeth shaped protrusions to further improve clamping of the pipe (9) in its inner part, once it has been coupled.

The inner insert (2) has a flat area (37) for internally shaping the pipe (9) together with the flat area (36) of the release element (7).

Figure 3 shows a sectional view of the asymmetrical tapered inner seal (3) to ensure sealing in the inner part of the pipe (9) of the coupling. This inner seal (3) has a frusto conical section with a sloped outer shape (19) configured to be in contact with the pipe (9). The slope (19) is configured to facilitate insertion of the pipe (9) from a smaller to a greater slope (19). The inner seal (3) comprises a flat inner surface (20) with the purpose of being perfectly received into the annular recess (13) of the inner insert (2). Said flat surface (20) comprises three annular shaped internal protrusions (21) in order to be fitted therein and to absorb irregularities that may exist in the annular recess (13) of the inner insert (2).

It is configured with a semi-circular annular recess, in the outer thicker area (22), in order to act as a spring when the pipe (9) is inserted with less actuation in case of larger internal diameters or with greater actuation in case of pipes (9) having smaller internal diameters, the design of the inner seal (3) being configured to cover a wider range of tolerances of the plastic or metal pipes (9) because of differences in inner diameters of the pipes (9) due to different formats in wall thickness, being different in each type of pipe (9) according to their manufacturing standard.

Figure 4 shows a sectional view of the O-ring type outer seal (4) to ensure sealing on the outer part of the coupling pipe (9). Such outer seal has a symmetrical large diameter frusto conical section (23) to absorb manufacturing tolerances of the outside diameter of the plastic or metal pipes (9). Their accommodation into the lower portion (11) of the body (1) together with the attachment of the attachment ring (5) ensures that the pipe outer sealing is prior to the open portion of the outer bushing (8) avoiding contact of water with the metal elements of the locking element (6). This outer seal (4) is secondary in case of assembling the coupling with inner insert (2) acting as a safety seal in case of breakage the inner seal (3). In the event that the configuration of the coupling is without inner insert (2), the outer seal (4) acts as a main sealing element.

Figure 5 shows a three dimensional view of the attachment ring of the O-ring type outer seal (4). This element has the purpose of forming a receptacle together with the portion (11) of the body (1) so that the outer seal (4) works tightly. It is provided with an annular recess (24) through its entire diameter for locking mobility by the outer bushing (8) preventing it from being moved and thus losing sealing capacity of the outer ring (4).

Figure 6 shows a three dimensional view of the attachment ring (6) whose purpose is attaching the pipe (9) at its outer part through a mixed plastic-metal toothed portion, having a cylindrical tapered configuration in the outer part in order to conform to the outer bushing (8) and to apply higher anchoring pressure on the pipe (9). The attachment ring (6) is not attached through its entire perimeter (25) so as to facilitate insertion of the pipe (9). The inner part is configured by a plurality of saw teeth (26) facing the inside in order to facilitate insertion of the pipe (9) and so that all the saw teeth (26) are anchored in the entire diameter of the pipe (9) and thus preventing them from being disengaged, so that when the pipe (9) is subjected to internal pressure, it is moved to come out of the coupling, with the pipe (9) being followed by the locking element (6) and when the tapered portion of the bushing (8) is reached, the locking element (6) applies pressure, closing the portion (25) against the outer surface of the pipe (9), nailing the saw teeth (26) so that the pipe (9) is prevented from being disengaged from the invention.

The locking element (6) in the inner part where the saw teeth (26) are configured has a metal insert (27) comprising a metal circular ring, open at one portion of the perimeter (28), with a plurality of teeth (29) oriented to facilitate insertion of the pipe (9) and nailing on any surface of the plastic and/or metal pipe (9).

The locking element (6) has, in the thicker area and on its inner part (30), a crenellation type plural configuration that provides the necessary and sufficient flexibility to engage the outer surface of the pipe (9) evenly, resisting pulling forces caused by the pressure inside the pipe (9) against the outer bushing (8).

Figure 7 shows a three dimensional view of the release element (7), whose purpose is the possibility to recover the rapid-effect coupling from the pipe (9) at a given time as desired by the operator. Such release member (7) is received such that it can not be operated occasionally by the operator as it is in the inner part of the outer bushing (8) such that a special auxiliary element is required to actuate the release member (7). It has a configuration at the outer part (14) thereof through the entire diameter with an annular shaped protrusion acting as end of travel (15) on the inside of the outer bushing (8). The inner part (16) of the release member (7) is designed as having a frusto conical shape to facilitate engagement with the locking element (6) when it is actuated, such that the plastic teeth (26) and the metal teeth (27) of the locking element (6) are disengaged due to their increase in diameter, releasing the pipe (9), recovering it from the coupling.

On the outside of the fins (31) it has a 90° annular protrusion that is configured to act as end of travel for the release element (7) preventing it from being removed from the outer bushing (8).

The release member (7) has a plurality of longitudinal grooves (31), distributed along the circumference of the release element (7) to enhance flexibility of the element and to facilitate assembly on the outer bushing (8).

The release member (7) has a flat area (36) on its inner part in order to form the oval shape of plastic pipes (9) produced during the manufacturing process due to cutting pressure exerted by the operator or due to the fact that they are typically supplied in rolls and therefore become oval. Pressing and forming the flat area (36) on the outside of the pipe (9) and the flat area (37) of the inner insert (2) in order to ensure that the inner seal (3) is not rolled, as well as ensuring uniformity of the inner part of the pipe (9) when contacting the inner seal (3).

Figure 8 shows a three dimensional view and a section of the cylindrical shaped outer bushing (8) whose purpose is clamping to the body (1) by means of a protrusion towards the interior (32) with a 90° configuration acting as the negative to the annular protrusion of the portion (10) in the body (1). Attachment of the attachment ring (5) is carried out by an annular protrusion (33) through the entire perimeter of the outer bushing (8). A frusto conical shaped sliding portion (34) for fitting the attachment ring (6) is provided to act pressing and closing the locking element (6) to prevent the pipe (9) from coming out of the coupling.

The outer bushing (8) has an end of travel portion (15) that is configured to prevent the release member (7) from being excessively displaced out of its action area.

The outer bushing (8) has a rectangular protrusion (39) for adjusting the mobility of the outer bushing (8) to the body (1) and prevent if from being rotated.

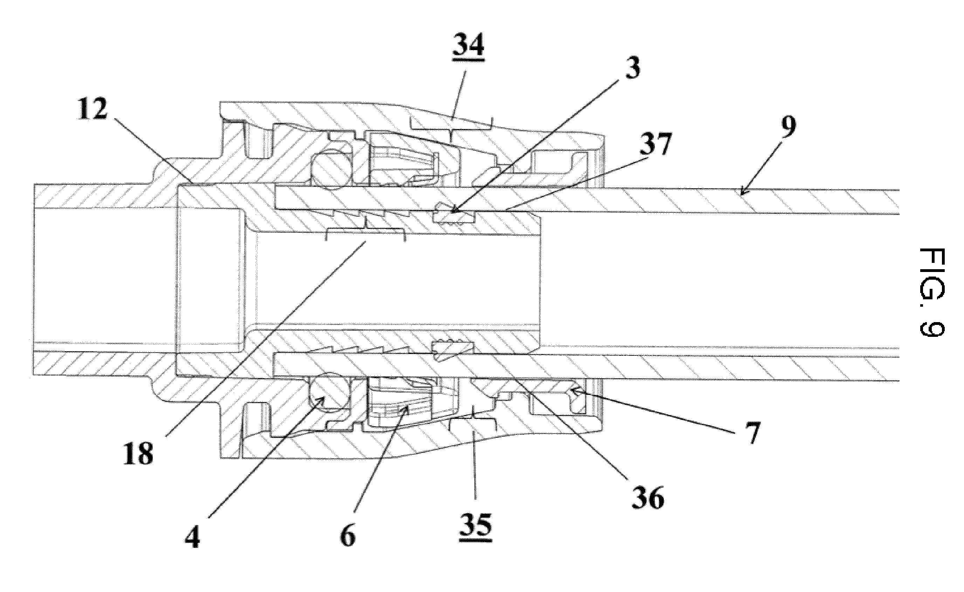

Figure 9 shows a sectional view of the rapid-effect coupling with a pipe (9) in a final, installed condition without being subjected to an internal pressure. In this configuration, the locking element (6) is, at portion (34), in a condition with no pressure on the pipe (9) due to the lack of internal pressure on the pipe (9) and therefore no pulling forces are applied to displace the locking element (6) on the frusto conical section (34) of the outer bushing (8).

The travel of the release member (7) can be seen in portion (35) of the outer bushing (8) when actuated to release the pipe (9) from the locking element (6).

The contact area of the asymmetrical tapered inner seal (3) is shown with the inside of the pipe (9) where the sealing of the coupling with pipe (9) is ensured. Also the contact area of the O-ring type outer seal (4) with the outside of the pipe (9) is shown.

The saw teeth (18) of the inner insert (2) in contact with the inside of the pipe (9) are shown in a position to be nailed.

The shape of the pipe is shown in its outer and inner parts to remove the oval shape of the plastic pipes through the flat area (36) of the release member (7) and the flat area (37) of the inner insert (2).

The portion (12) of the inner insert (2) when attached to the body (1) by means of ultrasound is shown.

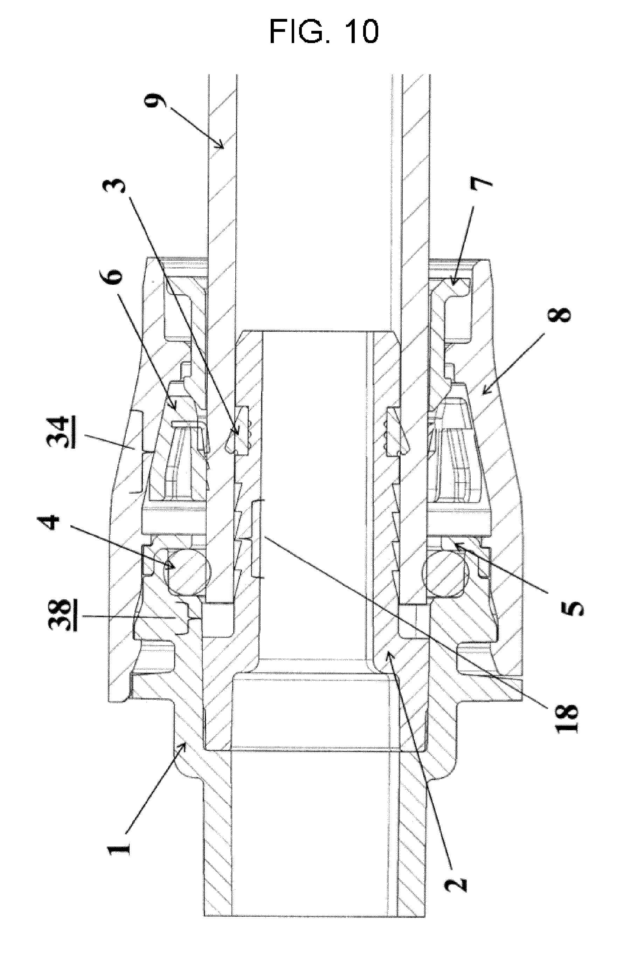

Figure 10 shows a sectional view of the rapid-effect coupling with a pipe in a final, mounted state subjected to an internal pressure. In this configuration, the locking element (6) is, at portion (34), in position of pressure on the pipe (9), due to the fact that there is a pulling force on the pipe (9) outwards the coupling, moving the attachment ring (6) through the frusto conical portion (34) of the outer bushing (8).

When the locking element (6) is pressing on the outer surface of the pipe (9) as it is pulled by the internal pressure, the configuration of the coupling is arranged so that the locking element (6) acts on the outer part of the pipe (9) just above the inner seal (3), helping to attach the pipe (9) over the greater contact area of the inner ring (3) on the inside of the pipe (9).

From this figure it can be seen that the portion (38) is sized having the same path as portion (34) during displacement of the locking element (6) so that the pipe (9) does not lose sealing properties in the outer seal (4) on the outer part of the pipe (9).

The saw teeth (18) of the inner insert (2) in contact with the inner part of the pipe (9) are shown once nailed as the pipe (9) has been pulled by them due to the internal pressure under which it is subjected.

The assembly of the invention is carried out originally starting from the body (1) and the inner insert (2) is welded by means of ultrasound depending on the inside diameter and thickness of the plastic or metal pipe (9) which is to be coupled. Such ultrasonic welding is produced in portion (12) of the inner insert (2). The asymmetrical tapered inner seal (3) is mounted on the receptacle (13) of the inner insert (2). The outer seal (4) is mounted on the receptacle formed by the attachment ring (5) and the body (1). Once the outer seal (4) is mounted, the attachment ring (5) is mounted on the body (1).

Thereafter, the release member (7) is mounted on the portion (15) of the outer bushing (8). The attachment ring (6) is mounted inside the outer bushing (8) so that the frusto conical parts of both elements match.

Once the above mentioned different parts have been assembled on the body (1) and the above mentioned various elements have been assembled on the outer bushing (8), the outer bushing (8) is attached under axial pressure on portion (10) of the body (1), the different parts being attached into a single coupling unit.

When the pipe (9) is inserted into the coupling, it is axially retained by the attachment ring (6) by the internal pressure under which the pipe (9) is subjected, the attachment ring (6) presses radially on the outside diameter of the pipe (9) and in conjunction with the frusto conical portion of the outer bushing (8). As a result of this configuration, the plastics saw teeth (26) and the metal teeth (29) of the locking element (6) are nailed on the outside diameter of the tube (9) and saw teeth (18) of the inner insert (2) are nailed on the inner diameter of the tube (9) and under axial force in the opposite direction to that of the connection of the pipe (9) avoiding it from being released, keeping sealing internally through the inner seal (3) and the outer seal (4) on the tube (9) on its inner and outer parts.

The advantages and capabilities of the invention are essentially a simple pre-assembly of the rapid-action coupling providing a secure and reliable connection with the different pipes (9) thanks to its double inner (3) and outer (4) sealing. The product range is characterized by a small number of bodies (1) that makes it wider due to the assembly of the inner inserts (2) welded by means of ultrasounds, resulting in that a wide range of references is obtained through a small number of bodies (1) which is very useful for the assembly in different applications.

Also a further advantage of the invention is its universality in the use with different types of plastic and metal pipes, such as cross-linked polyethylene pipes, multilayer pipes with aluminium core, temperature resistant polyethylene pipes, multilayer pipes with EVOH outer layer, random polypropylene pipes, PVC pipes, PVC-C pipes and copper pipes.

Additional advantages of the invention are that there is no need to use special tools, or electric, pneumatic or hydraulic energy for their operation during on-site assembly. Run time savings are achieved over traditional systems such as radial pressure or axial compression attachments, fusion electro fusion welding attachments to the pipe.

In addition, the tube (9) can be recovered from the coupling through the release member (7) with no need for disassembling the coupling, thus avoiding the risk of handling the inner parts therein by the user and, in turn, in compliance with the different installation regulations in countries where it is required that the couplings embedded in the building can not be removable, and with a record thereof being required to be placed.

## Claims

1. Rapid-action coupling for pipes, **characterized by** a body (1) consisting of at least one inner insert (2) with a cylindrical configuration for receiving and inserting a plastic or metal pipe (9), each inner insert (2) forming an annular recess (13) to accommodate the asymmetrical tapered inner seal (3) and comprising a sloped outer surface (19) configured to contact the interior of the pipe (9) and an inner flat surface (20) configured to contact the annular recess (13) which includes three internal protrusions (21), wherein an outer seal (4) is received between the body (1) and the attachment ring (5) configured to contact the outside of the pipe (9), with a tapered locking grip (6) received into the portion (34) of the outer bushing (8) configured by plastic saw teeth (26) and metal teeth (29) configured to contact by radial pressure on the outer part of the pipe (9), with a release member (7) received into the outer bushing (8) configured to drive, by axial compression, through an external element, the locking grip (6), and to release the pipe (9) from the rapid-action coupling and an outer bushing (8) configured to axially retain the body (1).

2. Rapid-action coupling according to claim 1, wherein the inner insert (2) and the body (1) are provided with a protrusion in the portion (12) to be welded by means of ultrasound.

3. Rapid-action coupling according to claim 1 and 2, wherein the annular recess (13) is at least four mm wide to ensure positioning of an asymmetrical tapered inner seal (3) having a special design and width to prevent the pipe (9) from being rolled.

4. Rapid-action coupling according to at least one of the preceding claims, wherein the inner insert (2) has a saw teeth portion (18) in order to attach the pipe (9) on the inner part thereof.

5. Rapid-action coupling according to at least one of the preceding claims, wherein the asymmetrical tapered inner seal (3) has three annular protrusions (21) whose purpose is to fit and seal the annular recess (13) of the inner insert (2).

6. Rapid-action coupling according to at least one of the preceding claims, wherein the asymmetrical tapered inner seal (3) has a portion with semi-circular annular recess (22) in order to act as a spring when the pipe (9) is inserted with less actuation in case of larger internal diameters or with greater actuation in the case of pipes (9) having smaller internal diameters.

7. Rapid-action coupling according to at least one of the preceding claims, wherein the coupling has a second outer seal (4) acting as an additional safety seal to fully ensure sealing of the coupling to the pipe (9) in case of failure of the inner seal (3) due to breakage because of a poor operator's performance or by a loss of sealing due to a thickness of the pipe (9) outside the tolerances of its manufacturing standard.

8. Rapid-action coupling according to at least one of the preceding claims, wherein the coupling has an attachment ring (5) which, together with the body (1), form the sealing receptacle of the outer seal (4) through attachment by the outer bushing (8) with an annular rib (33).

9. Rapid-action coupling according to at least one of the preceding claims, wherein the locking element (6) has at least three plastic saw teeth (26) and a metal tooth (29) in the inside contour and wherein the metal insert (27) provided with the teeth (29) is inside the locking member (6) compactly in a single piece with no joints, wherein the configuration of the locking element (6) in the inner part thereof and in all of the contour has a crenellation-like structure (30) providing greater flexibility and adaptation to radial compression.

10. Rapid-action coupling according to at least one of the preceding claims, wherein the release member (7) is received inside the outer bushing (8) hidden to manipulation, an external element being necessary for its activation.
